# NEUE EUROPÄISCHE PATENTSCHRIFT

(11) **EP 2 569 211 B2**
(45) Veröffentlichungstag und Bekanntmachung des Hinweises auf die Entscheidung über den Einspruch: **21.03.2018**
(45) Hinweis auf die Patenterteilung: 22.10.2014
(21) Anmeldenummer: 11725318.7
(22) Anmeldetag: 09.05.2011
(51) Int. Cl.: B62D 25/20, B62D 21/10, B62D 21/15, B62D 25/02, B62D 29/00

(54) **KAROSSERIESTRUKTUR, INSBESONDERE BODENSTRUKTUR, FÜR EIN KRAFTFAHRZEUG**
BODY STRUCTURE, IN PARTICULAR FLOOR STRUCTURE, FOR A MOTOR VEHICLE
STRUCTURE DE CARROSSERIE, EN PARTICULIER STRUCTURE DE PLANCHER, POUR VÉHICULE À MOTEUR

(30) Priorität: 10.05.2010 DE 102010019992
(43) Veröffentlichungstag der Anmeldung: 20.03.2013
(60) Teilanmeldung: 14179222.6
(73) Patentinhaber: Volkswagen Aktiengesellschaft, 38436 Wolfsburg (DE)
(72) Erfinder: KRAUTH, Werner, 38442 Wolfsburg (DE); BÖSCHE, Thorben, 38446 Wolfsburg (DE); SCHIFFERLI, Gwendolin, 38459 Bahrdorf-Saalsdorf (DE); STEINRÜCKEN, Martin, 38518 Gifhorn (DE); THIELE, Stefan, 38116 Braunschweig (DE); HILLMANN, Jürgen, 38518 Gifhorn (DE)
(74) Vertreter: Liebl, Thomas
(86) Internationale Anmeldenummer: PCT/EP2011/002292
(87) Internationale Veröffentlichungsnummer: WO 2011/141147

(56) Entgegenhaltungen:
- WO-A2-2004/076266
- DE-A1-102006 052 992
- FR-A3- 2 945 267

## Beschreibung

Die Erfindung betrifft eine Karosseriestruktur, insbesondere eine Bodenstruktur, für ein Kraftfahrzeug nach dem Oberbegriff des Anspruchs 1.

Im Bereich des Automobilbaus besteht ein dauerhaftes Bestreben, das Fahrzeuggesamtgewicht abzusenken oder bei verbesserten Ausstattungen das Fahrzeuggesamtgewicht nicht ansteigen zu lassen. Dies kann jedoch nur realisiert werden, wenn das Gewicht bestimmter Fahrzeugkomponenten abgesenkt wird. Hierbei wird insbesondere versucht, das Gewicht der Fahrzeugrohkarosserie deutlich gegenüber früheren Karosseriegestaltungen abzusenken. Gleichzeitig sind jedoch auch die Anforderungen an die Sicherheit, insbesondere die Personensicherheit, im Kraftfahrzeug und an das Verhalten einer Karosseriestruktur bei einer Crashsituation gestiegen. So wird insbesondere gefordert, dass die Rohkarosserie bei gleichzeitig verringertem Gewicht nach wie vor eine hohe bzw. erhöhte Festigkeit und Steifigkeit bei einem definierten Verformungsverhalten zeigt. Um diesen Anforderungen gerecht zu werden, werden im modernen Fahrzeugbau Karosserien eingesetzt, bei denen sowohl Bauteile aus Leichtmetall als auch aus Stahlblech gefertigte Karosseriebauteile Verwendung finden.

In diesem Zusammenhang ist es weiter allgemein bekannt, bestimmte Stahlblech-Karosseriebauteile aus warmumgeformten Blechen auszubilden, die eine gegenüber kaltumgeformten Blechbauteilen höhere Festigkeit aufweisen. Mit dem Einsatz derartiger warmumgeformter, hoch- bzw. höchstfester Bauteile kann für bestimmte Karosseriebereiche eine höhere Festigkeit zur Verfügung gestellt werden. Derartige warmumgeformte Bleche werden im Automobilbau auch als formgehärtete Blechbauteile bezeichnet. Nachstehend werden daher die Begriffe "Formhärten" und "Warmumformen" synonym verwendet und darunter in einem weiten Sinne solche Blechbauteile verstanden, die eine gegenüber kaltumgeformten Blechen höhere Festigkeit aufweisen.

Beispielsweise ist der Einsatz derartiger warmumgeformter bzw. formgehärteter Blechbauteile bereits aus der DE 10 2004 037 789 B3 bekannt, bei der eine Bodengruppe für die Karosserie eines Kraftfahrzeugs eine Bodenplatte mit einem Fußraum, einem in Fahrzeuglängsrichtung verlaufenden Tunnel sowie Anbindungsabschnitte für die vorderen und hinteren Längsträger aufweist. Die Bodenplatte ist hier aus einer einteiligen, umgeformten Blechplatine hergestellt, wobei zur Einstellung des Deformationsverhaltens bestimmte Bereiche vorgesehen sind, die gegenüber anderen Bereich der Bodenplatte eine höhere Festigkeit aufweisen. Hierzu sind die Bereich höherer Festigkeit partiell warmgeformt und vergütet. Die Bereiche höherer Festigkeit können dabei im Fußraum liegen oder am Tunnel angeordnet sein. Im Fall von an der Bodenplatte angeformten Seitenschwellern können auch diese warmgeformt und vergütet sein. Das Gleiche gilt für in der Bodenplatte ausgeformte Sitzquerträger. Auch diejenigen Bereiche der einstückigen Blechplatine, an denen vordere bzw. hintere Längsträger angebunden werden sollen, können mit einer höheren Festigkeit walztechnisch warmumgeformt werden. Ein zur DE 10 2004 037 789 B3 ähnlicher Aufbau ist weiter auch aus der DE 10 2004 044 925 B3 bekannt.

Der Einsatz von warmumgeformten Blechen ist auch aus der DE 10 2004 021 553 A1 bekannt, bei der ein Längshohlträger aus zwei Einzelprofilen zusammengesetzt ist, wobei die Einzelprofile unterschiedliche Festigkeiten aufweisen.

Ferner ist aus der EP 1 382 514 A1 eine Bodenstruktur für Kraftfahrzeuge bekannt, bei der jeder Sitzquerträger der Bodenstruktur aus einem quer zur Fahrzeuglängsachse angeordneten mittleren Trägerprofil mit endseitigen, in Fahrzeuglängsrichtung weisenden hohlprofilartigen, hutförmigen Sitzaufnahmen besteht, wobei die jeweils tunnelseitig angeordnete Sitzaufnahme als Verstärkungselement für den Mitteltunnel ausgebildet ist und sich in die Außenkontur des Mitteltunnels erstreckt.

Zudem ist aus der DE 10 2006 052 992 A1 eine Rahmenstruktur für den Unterboden einer selbsttragenden Kraftfahrzeugkarosserie bekannt, die einen länglichen Tunnel mit zwei hierzu parallelen und geraden Schwellern aufweist. Ein Stirnwandquerträger mit seinem Schließblech ist einerseits direkt mit dem Tunnel und andererseits den beiden Schwellern verschweißt. Der Tunnel ist zusätzlich mit einem Fersenblech verschweißt, das parallel zum Strinwandquerträger verläuft. Die Rahmenstruktur besteht aus einem hochfesten Stahl mit einer Streckgrenze von 850 MPa. Die Rahmenstruktur dient der Aufnahme der Bodenbeplankung und auch der Aufnahme des Bodens vorne. Die Bodenbeplankung bzw. der vordere Boden kann aus einem Blech oder aus einem Kunststoff hergestellt sein.

Demgegenüber ist es Aufgabe der vorliegenden Erfindung, eine Karosseriestruktur, insbesondere eine Bodenstruktur, für ein Kraftfahrzeug zur Verfügung zu stellen, die in Verbindung mit dem Einsatz von gewichtsgünstig gestalteten Karosseriebauteilen ein ausgezeichnetes Deformationsverhalten insbesondere in Verbindung mit FrontCrashsituationen aufweist.

Diese Aufgabe wird gelöst mit den Merkmalen des Anspruchs 1. Vorteilhafte Weiterbildungen sind Gegenstand der darauf rückbezogenen Unteransprüche.

Gemäß Anspruch 1 wird eine Karosseriestruktur, insbesondere eine Bodenstruktur, für ein Kraftfahrzeug mit definierte Lastpfade für Crashsituationen ausbildenden Trägerbauteilen vorgeschlagen, wobei die im Bereich eines Frontcrash-Lastpfades liegenden Trägerbauteile wenigstens zum Teil durch hochfeste Trägerbauteile, vorzugsweise durch komplett durchgehärtete oder partiell bzw. teilweise durchgehärtete hochfeste Trägerbauteile, aus einem warmumgeformten bzw. formgehärteten Stahlblech gebildet sind, die unmittelbar oder mittelbar, vorzugsweise unmittelbar, miteinander verbunden sind, insbesondere kraft- und/oder form- und/oder stoffschlüssig miteinander verbunden sind. Erfindungsgemäß ist vorgesehen, dass die im Bereich eines Frontcrash-Lastpfades liegenden hochfesten Trägerbauteile wenigstens durch jeweils ein, bezogen auf die Fahrzeugquerachse, auf gegenüberliegenden Fahrzeugseiten liegendes Längsträgerbauteil gebildet sind , das durch eine Längsträgerverlängerung gebildet ist, die sich an einen vorderen Längsträger aus einem demgegenüber niederfesten Stahlmaterial anschließt und unmittelbar mit einem hochfesten Fußraum-Querträger verbunden ist, der ein im Bereich des Frontcrash-Lastpfades liegendes hochfestes Trägerbauteil aus einem warmungeformten und/oder formgehärteten Stahlblech ausbildet.

Dadurch, dass quasi lediglich die Längsträgerverlängerung aus einem hochfesten Stahlmaterial ausgebildet ist, kann der sich daran nach vorne anschließende vordere Längsträger aus einem gewichtsgünstigen und ein definiertes Beul- bzw. Crashverhalten aufweisenden Längsträger gebildet sein, über den bei einem Frontalcrash in ausgezeichneter Weise Kräfte aufgenommen und in den zum Großteil aus hochfesten Bauteilen gebildeten Frontcrash-Lastpfad eingeleitet werden können. Insbesondere in Verbindung mit einem derartigen Aufbau ist es von Vorteil, wenn das hochfeste Schwellerbauteil unmittelbar mit dem hochfesten A-Säulenbauteil und mit dem Fußraum-Querträger verbunden ist bzw. wenn das hochfeste Mitteltunnelbauteil unmittelbar oder mittelbar, vorzugsweise unmittelbar mit dem Fußraum-Querträger verbunden ist.

Insbesondere die Kombination sämtlicher bzw. der meisten der zuvor genannten Bauteile bildet einen hochfesten Bauteilverbund aus, der hervorragend geeignet ist, um in Verbindung mit einem Frontcrash keine oder nur wenig Verformung zuzulassen.

Bei dem Schwellerbauteil kann es sich bevorzugt um ein innenliegendes Schwellerbauteil. Unter einem innenliegenden Bauteil wird hier, wie auch nachfolgend, vornehmlich ein Bauteil verstanden, das im montierten Zustand, bezogen auf die Lage im Fahrzeug, mehr zur Fahrzeuginnenseite hin liegt als ein damit verbundenes Außenteil derselben Baugruppe.

Gemäß einer weiteren besonders bevorzugten Ausgestaltung ist vorgesehen, dass die nicht im Bereich des oder der definierten Lastpfade liegende Karosseriebauteile oder Beplankungen wenigstens zum Teil aus einem gegenüber den hochfesten Trägerbauteilen niederfesten Stahlmaterial und/oder aus einem Leichtmetall und/oder gegebenenfalls sogar aus einem Kunststoffmaterial, zum Beispiel einem faserverstärkten Kunststoffmaterial, hergestellt sind.

Mit einer derartigen erfindungsgemäßen Lösung wird somit ein konsequenter Einsatz von warm umgeformten bzw. formgehärteten Stahlblechen in den crashseitig hochbelasteten Bereichen erzielt, um die Deformation in denjenigen Bereichen zu verringern, wo die Karosseriestruktur keine oder nur wenige Verformungen bei einer definierten Crashsituation zulassen soll. Gleichzeitig können damit das Gewicht und die Teilevielfalt der Karosseriestruktur vorteilhaft reduziert werden und somit günstige Bedingungen insbesondere im Hinblick auf den CO₂-Ausstoß und die Kosten erreicht werden.

Gemäß einer bevorzugten konkreten Ausführungsform ist weiter vorgesehen, dass die im Bereich eines Frontcrash-Lastpfades liegenden hochfesten Trägerbauteile weiter auch durch ein in Fahrzeuglängsrichtung verlaufendes Mitteltunnelbauteil gebildet sind.

Mit einem derartigen Karosserieaufbau können die Frontcrashkräfte in vorteilhafter Weise über die vorderen Längsträger bzw. das hochfeste Längsträgerbauteil auf den Schweller sowie über den hochfesten Fußraum-Querträger auch auf das hochfeste Mitteltunnelbauteil übertragen werden, wodurch sich eine hervorragende Kraftableitung und damit ein besonders günstiges Deformationsverhalten im Falle eines Frontcrashes ergibt. In diesem Zusammenhang soll explizit erwähnt werden, dass mittels der Warmumformung bzw. dem Formhärten einzelner hochfester Trägerbauteile gleichzeitig eine deutliche Reduzierung der Bauteilvielfalt einhergeht; so können die hochfesten Bauteile, wie zum Beispiel das hochfeste Mitteltunnelbauteil, im Rahmen des Herstellvorgangs gemäß dem Tailored-Rolled-Blank-Verfahren mit unterschiedlichen Materialstärken sowie vor allem einstückig hergestellt werden, so dass aufwendige Blechkonstruktionen mit zusätzlichen Verstärkungsblechen entfallen können.

Das Crashverhalten der erfindungsgemäßen Fahrzeugkarosserie lässt sich bei einem Frontcrash noch zusätzlich dadurch erhöhen, dass auf in Fahrzeugquerrichtung gegenüberliegenden Fahrzeugseiten jeweils ein erster, vorderer Längsträger aus einem niederfesten Stahlmaterial angeordnet ist, an den sich jeweils eine hochfeste Längsträgerverlängerung anschließt, die an einem in Fahrzeughochachsrichtung unteren Bereich des sich in etwa über die Türhöhe erstreckenden hochfesten A-Säulenbauteils angebunden ist, während gleichzeitig an einem demgegenüber oberen Bereich des hochfesten A-Säulenbauteils ein weiterer, zweiter, sich in etwa in Fahrzeuglängsrichtung erstreckender vorderer Längsträger angebunden ist. Dieser vordere zweite Längsträger verläuft bevorzugt in Fahrzeughochachsrichtung oberhalb und/oder in Fahrzeugquerachsenrichtung gesehen weiter außen liegend als der jeweils zugeordnete erste Längsträger. Mit einer derartigen doppelten Längsträgeranordnung auf den gegenüberliegenden Fahrzeugseiten ergibt sich insbesondere bei Frontcrashsituationen, die seitlich angelegt sind, eine vorteilhafte Krafteinleitung über zwei seitliche Längsträger, und zwar einmal, bezogen auf die Fahrzeughochachsenrichtung, von der oberen Seite sowie weiter von der unteren Seite des A-Säulenbauteils her, so dass die eingeleiteten Frontcrashkräfte bereits hier vorteilhaft aufgeteilt und anschließend auf die weiteren tragenden sowie im wesentlichen hochfesten Bauteile weitergeleitet werden können.

Konkret können die im Bereich zwischen den beiden gegenüberliegenden A-Säulenbauteilen verlaufenden Bauteile oder Beplankungen, vorzugsweise eine Stirnwand, höchstbevorzugt eine am hochfesten Fußraumquerträger angebundene Stirnwand, und/oder ein windschutzscheibennaher Querträger, vorzugsweise ein an einer Stirnwand angebundener Querträger, aus einem niederfesten Stahlmaterial und/oder einem Leichtmetall bzw. gegebenenfalls sogar aus einem Kunststoffmaterial hergestellt sein und unmittelbar oder mittelbar mit den hochfesten A-Säulenbauteil und/oder den hochfesten Längsträgerverlängerungen und/oder den zweiten Längsträgern und/oder dem hochfesten Fußraum-Querträger verbunden sein, wodurch sich eine gewichtsgünstig und kompakt aufgebaute sowie hinsichtlich des Frontcrashverhaltens optimierte Karosseriestruktur ergibt.

In diesem Zusammenhang ist es weiter vorteilhaft, dass die im Bereich zwischen den beiden Längsträgern oder zwischen den Längsträgern und/oder der Längsträgerverlängerung vorgesehenen oder angebundenen Bauteile oder Beplankungen, vorzugsweise ein Radhausbauteil und/oder ein Federbeindombauteil, aus einen niederfesten Stahlmaterial und/oder aus einem Leichtmetall bzw. gegebenenfalls sogar aus einem Kunststoffmaterial, zum Beispiel einem faserverstärkten Kunststoffmaterial, ausgebildet sind.

Ein noch weiter optimiertes Crashverhalten ergibt sich mit einer Ausgestaltung, bei der sich an die hochfeste Längsträgerverlängerung ein sich im montierten Zustand in den Fahrgastzellenbereich hinein erstreckender Längsträgerbereich anschließt, der in etwa parallel zum hochfesten Mitteltunnelbauteil und/oder zu den hochfesten Schwellerbauteilen verläuft und/oder der aus einem niederfesten Stahlmaterial oder aus einem Leichtmetall oder aus einem Kunststoffmaterial ausgebildet ist, und/oder der sich in etwa bis zu einem heckseitigen Fersenblechteil und/oder einem heckseitigen Querträgerbauteil der Fahrgastzelle erstreckt und/oder der den Fußraum-Querträger durchgreift oder untergreift, insbesondere untergreift und abstützt. Mit einem derartigen gewichtsgünstigen fahrgastzellenseitigen Längsträgerbereich können die Frontcrashkräfte vorteilhaft neben der Verteilung auf den hochfesten Mitteltunnel bzw. die hochfesten Schwellerbauteile zusätzlich auch noch auf diese weiteren Längsträgerbereiche übertragen werden, so dass sich eine hochwertige, auf zahlreiche Kraftflusswege verteilte Kraftableitung über die im Wesentlichen gesamte Bodenbaugruppe ergibt, ohne dass diese Bodenbaugruppe einstückig herzustellen wäre.

Wie bereits zuvor in Verbindung mit dem hochfesten Mitteltunnelbauteil erwähnt, ist es von besonderem Vorteil, dass durch die Warmumformung bzw. durch das Formumhärten hochfeste Trägerbauteile hergestellt werden können, deren Teilevielfalt zudem reduziert ist. Dies gilt auch für die Ausbildung des Fußraum-Querträgers, der grundsätzlich einstückig, bevorzugt aber zweiteilig aus sich zwischen den gegenüberliegenden Fahrzeugseiten erstreckenden und/oder miteinander verbundenen einstückigen Querträgerteilen aufgebaut ist. Alternativ oder zusätzlich dazu kann auch das hochfeste A-Säulenbauteil durch ein, bezogen auf die Lage im Fahrzeug, inneres sowie unterhalb der Gürtellinie verlaufendes, einstückiges Bauteil ausgebildet sein.

Gemäß einer bevorzugten zweiten Ausgestaltung der vorliegenden Erfindungsidee ist vorgesehen, dass die im Bereich eines definierten Seitencrash-Lastpfades liegenden hochfesten Trägerbauteile wenigstens durch jeweils ein, bezogen auf die Fahrzeugquerachse, auf gegenüberliegenden Fahrzeugseiten liegendes, vorzugsweise innenliegendes Schwellerbauteil und/oder einen in Fahrzeugquerrichtung verlaufenden, bezogen auf die Fahrzeuglängsrichtung vorderen Fußraum-Querträger und/oder einen in Fahrzeugquerrichtung verlaufenden, bezogen auf die Fahrzeuglängsrichtung, hinteren Träger, insbesondere ein Fersenblech, und/oder einen in Fahrzeugquerrichtung verlaufenden Sitzquerträger gebildet sind. Dabei können der vordere hochfeste Fußraum-Querträger und/oder der hochfeste Sitzquerträger und/oder das hochfeste Fersenblech unmittelbar oder mittelbar, vorzugsweise unmittelbar, mit dem hochfesten Schwellerbauteil verbunden sein. Weiter kann alternativ oder zusätzlich dazu vorgesehen sein, dass der Sitzquerträger unmittelbar oder mittelbar mit einem hochfesten Mitteltunnelbauteil verbunden ist, das sich in Fahrzeuglängsrichtung gesehen zwischen dem Fußraum-Querträger und dem Fersenblech erstreckt und das mit dem Fußraum-Querträger und/oder mit dem Fersenblech unmittelbar oder mittelbar verbunden ist. Weiter können alternativ oder zusätzlich der Fußraum-Querträger und/oder das Schwellerbauteil unmittelbar oder mittelbar, vorzugsweise unmittelbar, mit einem A-Säulenbauteil verbunden sein, das sich vorzugsweise vom Schwellerbereich bis zur Gürtellinie eines Fahrzeugs erstreckt.

Mit diesen Maßnahmen, insbesondere mit der Kombination sämtlicher oder wenigstens eines Großteils dieser Maßnahmen, können die Seitenaufprallkräfte vorteilhaft über das jeweilige Schwellerbauteil auf den Fußraumquerträger bzw. den Sitzquerträger und das Fersenblech aufgeteilt, abgestützt und abgeleitet werden.

Besonders vorteilhaft ist in diesem Zusammenhang weiter eine konkrete Ausgestaltung, bei der die im Bereich eines Seitencrash-Lastpfades liegenden hochfesten Trägerbauteile einen bodenseitig und/oder fahrgastzellenseitig verlaufenden, in etwa ring- oder rechteckförmigen Rahmen aus hochfesten Trägerbauteilen ausbilden. Bevorzugt ist in Verbindung mit einem derartigen ringförmigen Aufbau vorgesehen, dass zur Ausbildung eines netz- oder gitterförmigen Aufbaus gegebenenfalls wenigstens ein weiteres, bevorzugt in Fahrzeugquerrichtung oder in Fahrzeuglängsrichtung verlaufendes hochfestes Trägerbauteil, vorzugsweise ein hochfestes Mitteltunnelbauteil und/oder wenigstens ein hochfester Sitzquerträger, strebenartig im bzw. innerhalb des Rahmens verläuft und/oder mit diesem mittelbar oder unmittelbar verbunden ist.

Auch mit einem derartigen Aufbau können somit vorteilhaft die im Bereich zwischen den gegenüberliegenden Schwellerbauteilen und/oder zwischen dem Mitteltunnelbauteil und den Schwellerbauteilen und/oder zwischen dem Fußraum-Querträger und dem hinteren Träger, insbesondere dem Fersenblech, liegenden Bauteile oder Beplankungen, insbesondere eine Bodenwand, aus einem niederfesten Stahlmaterial und/oder aus einem Leichtmetall und/oder aus gegebenenfalls sogar einem Kunststoffmaterial gewichtsgünstig hergestellt sein. Dadurch ergeben sich die zuvor genannten Vorteile einer sowohl gewichtsgünstig aufgebauten Karosserie mit optimiertem Crashverhalten.

Gemäß einer weiteren bevorzugten, konkreten Ausführungsform wird vorgeschlagen, dass die im Bereich eines definierten Heckcrash-Lastpfades liegenden hochfesten Trägerbauteile wenigstens durch jeweils einen, bezogen auf die Fahrzeugquerachse, auf gegenüberliegenden Fahrzeugseiten liegenden, hinteren bzw. heckseitigen Längsträger und/oder durch einen in Fahrzeugquerachsenrichtung verlaufenden, bezogen auf die Fahrzeuglängsrichtung, hinteren, vorzugsweise einstückigen, Querträger und/oder durch ein in Fahrzeugquerachsenrichtung verlaufendes, vorzugsweise einstückiges Fersenblech und/oder durch jeweils ein, bezogen auf die Fahrzeugquerachse, auf gegenüberliegenden Fahrzeugseiten liegendes, vorzugsweise innenliegendes Schwellerbauteil gebildet ist.

In diesem Zusammenhang ist es besonders vorteilhaft, wenn die hochfesten hinteren Längsträger unmittelbar oder mittelbar, vorzugsweise unmittelbar, mit dem zugeordneten, hochfesten Schwellerbauteil und/oder mit dem hochfesten hinteren Querträger und/oder mit dem hochfesten Fersenblech und/oder mit einem fahrgastzellenseitigen Längsträgerbereich, der nachfolgend noch näher gewürdigt wird, verbunden sind. Alternativ oder zusätzlich dazu kann das Fersenblech unmittelbar oder mittelbar, vorzugsweise unmittelbar, mit dem jeweils zugeordneten hochfesten Schwellerbauteil und/oder mit dem hochfesten hinteren Querträger und/oder mit einem vorzugsweise hochfesten Mitteltunnelbereich und/oder mit einem fahrgastzellenseitigen Längsträgerbereich, der nachfolgend noch näher beschrieben wird, verbunden sein.

Mit einem derartigen Aufbau des heckseitigen Karosseriebereichs wird eine zuverlässige Kraftaufteilung und Kraftverteilung bei einem Heckcrash erzielt, da die Heckcrashkräfte durch die hinteren Längsträger in die Schwellerbauteile bzw. die fahrgastzellenseitigen Längsträgerbereiche sowie auch in das Fersenblech bzw. den hinteren Querträger eingeleitet und damit vorteilhaft vielfältigst aufgeteilt und verteilt werden können. Dadurch können auch große Crashkräfte, wie auch bei den beiden zuvor beschriebenen Seitencrash- bzw. Frontcrash-Lastpfaden, vorteilhaft mit nur wenig Verformung und damit mit einem optimierten Insassenschutz aufgenommen werden.

Der zuvor bereits angesprochene fahrgastzellenseitige Längsträgerbereich wird bevorzugt durch eine Verlängerung eines vorderen Längsträgerbauteils gebildet, insbesondere durch einen sich an ein vorderwagenseitig angeordnetes, hochfestes Längsträgerbauteil anschließenden Längsträgerbereich gebildet, wobei bevorzugt vorgesehen ist, dass der fahrgastzellenseitige Längsträgerbereich aus einem niederfesten Stahlmaterial und/oder aus einem Leichtmetall und/oder aus einem Kunststoff hergestellt ist. Das hochfeste, vorderwagenseitig angeordnete Längsträgerbauteil schließt dabei wiederum bevorzugt an einen demgegenüber niederfesten und/oder aus einem Leichtmetall und/oder aus einem Kunststoffmaterial gefertigten vorderen Längsträger an, wie dies zuvor in Verbindung mit der Diskussion eines bevorzugten Frontcrash-Lastpfades bereits ausführlich beschrieben worden ist.

Gemäß einer weiteren bevorzugten Ausgestaltung ist vorgesehen, dass das hochfeste Schwellerbauteil in Fahrzeuglängsrichtung sowie nach hinten in Richtung Heckseite gesehen, über das Fersenblech hinaus mit einer demgegenüber aus einem niederfesten Stahlmaterial und/oder aus einem Leichtmetall- und/oder gegebenenfalls sogar einem Kunststoffmaterial hergestelltem Schwellerteilverlängerung verlängert und mit dieser Schwellerteilverlängerung mit dem jeweils zugeordneten hinteren hochfesten Längsträger und/oder mit dem hochfesten hinteren Querträger unmittelbar oder mittelbar, vorzugsweise unmittelbar, verbunden ist. Dadurch ergibt sich eine besonders bevorzugte Befestigungsmöglichkeit, die bei einfachem und preiswerten sowie gewichtsgünstigem Aufbau zudem sehr funktionssicher ist.

Weiter kann das hochfeste Schwellerbauteil mit dem hochfesten hinteren Querträger unmittelbar oder mittelbar, vorzugsweise unmittelbar, verbunden sein, um insgesamt einen sehr hochfesten Bauteilverbund auszubilden. Besonders vorteilhaft ist dabei insgesamt eine solche Geometrie, bei der die den Heckcrash-Lastpfad ausbildenden hochfesten hinteren Längsträger mitsamt den hochfesten fahrgastzellenseitigen Schwellerbauteilen einerseits sowie der hochfeste hintere Querträger und/oder das hochfeste Fersenblech andererseits eine bodenseitige, hochfeste H-förmige Struktur ausbilden.

Auch in Verbindung mit einer derartigen Heckcrash-Lastpfadausgestaltung ist es wiederum vorteilhaft, dass die im Bereich zwischen den gegenüberliegenden hinteren hochfesten Längsträgern und/oder dem hochfesten Fersenblech bzw. dem hinteren Querträger liegenden und/oder angeordneten bzw. die dort unmittelbar oder mittelbar angebundenen Bauteile und/oder Beplankungen, insbesondere eine Bodenwand und/oder ein rücksitzseitiger Sitzquerträger, aus einem demgegenüber niederfesten Stahlmaterial und/oder aus einem Leichtmetall und/oder ggf. sogar aus einem Kunststoffmaterial hergestellt sind. Dadurch ergeben sich wiederum die zuvor in Verbindung mit dem Seitencrash- bzw. Frontcrash-Lastpfad genannten Vorteile im Hinblick auf einen gewichtsgünstigen Aufbau.

Es versteht sich von selbst, dass die zuvor diskutierten und in den Ansprüchen beanspruchten Teilmerkmale beliebig untereinander ausgetauscht und/oder miteinander kombiniert werden können, um einen für den jeweiligen Einsatzfall optimierten Karosserieaufbau zur Verfügung zu stellen. Grundsätzlich kann an einer Fahrzeugkarosserie aber auch nur einer der zuvor beschriebenen Lastpfadaufbauten oder zwei der zuvor näher diskutierten Lastpfadaufbauten, zum Beispiel der Frontcrash- und der Seitencrash-Lastpfadaufbau oder der Seitencrash- und der Heckcrash-Lastpfadaufbau oder auch der Frontcrash- und Heckcrash-Lastpfadaufbau, umgesetzt sein. Besonders bevorzugt ist jedoch eine Karosseriegestaltung, bei der sämtliche zuvor diskutierten Lastpfad-Aufbauten umgesetzt sind, da hierdurch insgesamt ein hochfester Trägerbauteilaufbau genau in denjenigen crashseitig hochbelasteten Bereichen zur Verfügung gestellt wird, in denen die Deformationen dort, wo die Karosseriestruktur keine oder nur wenig Verformung bei einem Crash zulassen soll, verringert werden können, bei gleichzeitiger Reduzierung von Gewicht und Teilevielfalt und damit der Kosten.

Die Fertigung der hochfesten Trägerbauteile, wie sie zuvor im Einzelnen näher diskutiert worden sind, kann zum Beispiel im sogenannten Tailored-Blank-Verfahren erfolgen, mit dem die hochfesten Bauteile mit unterschiedlichen Werkstoffgüten oder Blechdicken gestaltet werden können. Besonders vorteilhaft ist hierbei der Einsatz des Tailored-Rolled-Blank-Verfahrens, um präzise gefertigte Blechteile zu erzeugen.

Bevorzugt werden die hochfesten, warmumgeformten bzw. formgehärteten Bauteile dabei so hergestellt, dass Stahlplatinen oder vorgeformte Stahlteile glühend heiß gepresst und anschließend in Sekundenschnelle heruntergekühlt werden. Die rasche Abkühlung bewirkt eine Gefügeveränderung im Material und sorgt für extreme Festigkeit der Karosserieteile. Gewichtseinsparung, eine hohe Crashsicherheit und eine positive Energiebilanz sind weitere Vorteile einer derartigen Verfahrensführung. Konkret wird bei der Herstellung der erfindungsgemäßen hochfesten Trägerbauteile im Rahmen des Formhärtens das jeweilige Stahlteil bzw. Blechteil in einem Ofen, zum Beispiel einem Rollenherdofen, auf über 900°C erhitzt. Anschließend greift ein Roboterarm das heranrollende glühende Teil und legt es in ein wassergekühltes Werkzeug. Die Presse fährt zu, innerhalb einer definierten Zeitspanne, zum Beispiel von 10 bis 15 Sekunden, wird das Teil auf zum Beispiel 170°C abgekühlt. Danach entnimmt ein Roboter das erkaltete und gehärtete Teil und befördert es in Transportgestelle.

Durch die vollständige bzw. wenigstens partielle Durchhärtung der Bauteile können dabei weitere vorteilhafte Bauteileigenschaften genau dort eingestellt werden, wo dies erforderlich ist, zum Beispiel an einem hochfesten Bauteil Bereiche mit unterschiedlichen Härten bzw. Härtegraden ausgebildet werden oder hochfeste Bauteile mit unterschiedlichen Härten bzw. Härtegraden ausgebildet werden.

Die Erfindung wird nachfolgend anhand einer Zeichnung näher erläutert.

Es zeigen:
- Fig. 1: schematisch eine Explosionsdarstellung einer erfindungsgemäßen Bodengruppe einer Kraftfahrzeugkarosserie,
- Fig. 2: die in der Fig. 1 in der Explosionsdarstellung gezeigte Fahrzeugkarosserie im zusammengebauten Zustand,
- Fig. 3: die Bodengruppe der Fahrzeugkarosserie nach Fig. 2 bei einem Frontcrash,
- Fig. 4: die Bodengruppe der Fahrzeugkarosserie gemäß Fig. 2 bei einem Seitencrash, und
- Fig. 5: die Bodengruppe der Kraftfahrzeugkarosserie gemäß Fig. 2 bei einem Heckcrash.

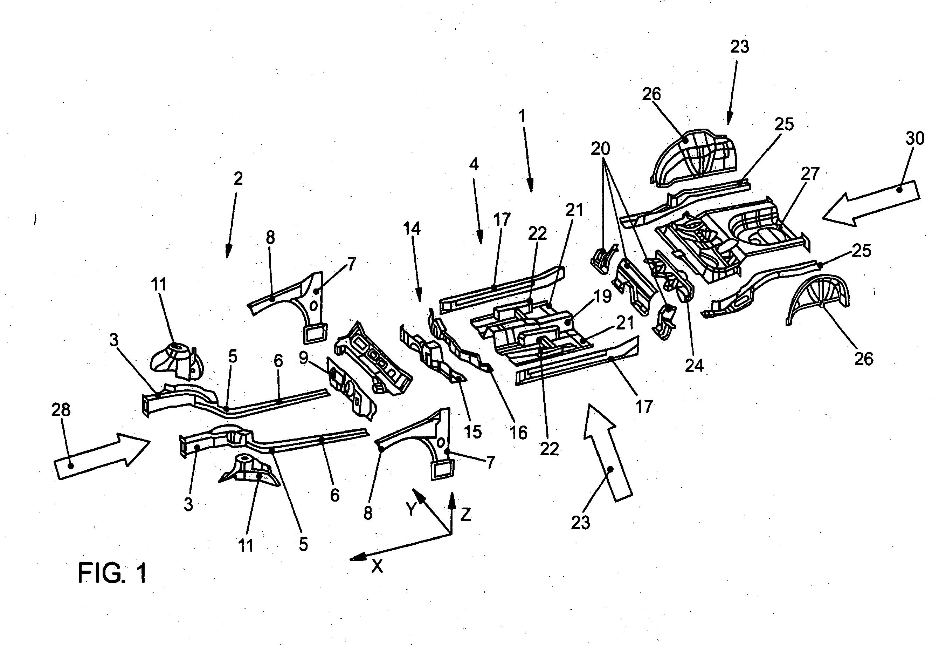

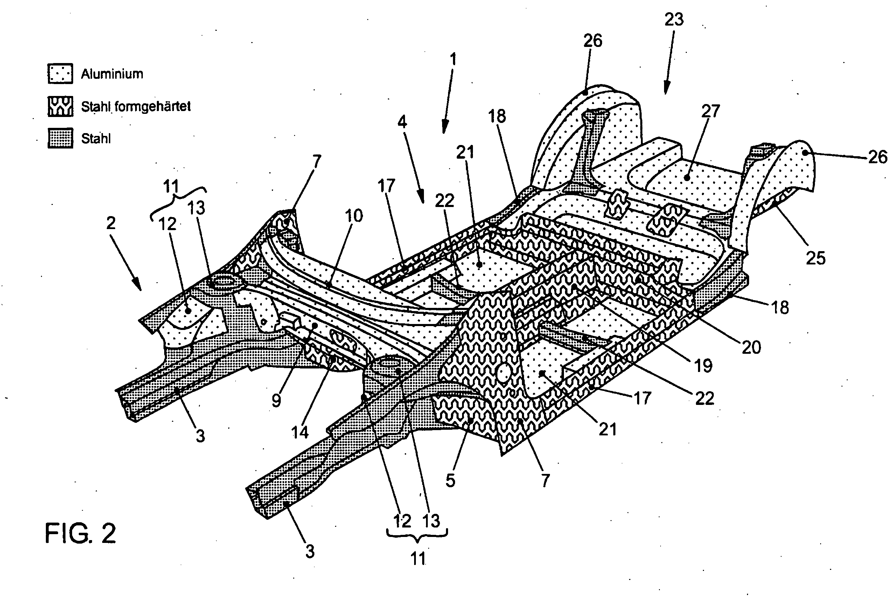

In der Fig. 1 ist eine beispielhafte Ausführungsform einer erfindungsgemäßen Bodenstruktur 1 für eine Kraftfahrzeugkarosserie in einer Explosionsdarstellung gezeigt, aus der heraus die einzelnen Bauteile sehr gut ersichtlich sind. In der Fig. 2 ist der zusammengebaute Zustand dieser Bodenstruktur 1 in perspektivischer Darstellung gezeigt.

Im einzelnen weist die Bodenstruktur 1 folgenden Aufbau auf:
In einem Vorderwagenbereich 2 weist die Bodenstruktur 1 zwei vordere, erste Längsträger 3 aus einem niederfesten, beispielsweise kaltumgeformten Stahlmaterial auf, an die sich in Fahrzeuglängsachsenrichtung x gesehen eine warmumgeformte bzw. formgehärtete und damit hochfeste Längsträgerverlängerung 5 anschließt.

An die hier beispielhaft ggf. auch nach außen wölbbare (Fig. 2) Längsträgerverlängerung 5 schließt sich ein sich im montierten Zustand in den Fahrgastzellenbereich 4 hinein erstreckender Längsträgerbereich 6 an, der beispielhaft aus einem niederfesten Stahlmaterial ausgebildet ist.

An die Längsträgerverlängerungen 5 aus einem hochfesten Stahlmaterial ist, wie dies insbesondere aus der Fig. 2 ersichtlich ist, auf in Fahrzeugquerrichtung y gegenüberliegenden Fahrzeugseiten jeweils ein A-Säulenbauteil 7 aus einem warmumgeformten bzw. formgehärteten Stahlmaterial angebunden, das sich in Fahrzeughochachsenrichtung z nach oben erstreckt. Die Anbindung der Längsträgerverlängerung 5 erfolgt dabei in einem, bezogen auf die Fahrzeughochachsenrichtung, unteren Säulenbereich (vergleiche insbesondere Fig. 2), während an einem demgegenüber oberen Säulenbereich ein zweiter vorderer Längsträger 8 aus einem gegenüber dem hochfesten A-Säulenbauteil 7 niederfesterem Stahlmaterial angeschlossen ist, der sich in Fahrzeuglängsachsenrichtung x nach vorne erstreckt und in etwa parallel bzw. beabstandet von dem ersten, vorderen Längsträger mehr zur Fahrzeugseite hin angeordnet ist.

Im Bereich zwischen den beiden Längsträgern 3, 8 bzw. den A-Säulenbauteilen 7 ist zum einen eine Stirnwand 9 und desweiteren ein oberhalb der Stirnwand 9 verlaufender bzw. mit dieser verbundener windschutzscheibennaher Querträger 10 angeordnet, die vorzugsweise beide aus einem Leichtmetall, zum Beispiel Aluminium, hergestellt sind.

Weiter sind im Vorderwagenbereich 2 jeweils im Bereich zwischen dem ersten Längsträger 3 und dem zweiten Längsträger 8 weitere Bodenstrukturbauteile angeordnet, nämlich ein Radhaus- und Federbeindom 11, der beispielsweise materialeinheitlich aus einem Aluminium oder einem niederfesten Stahlmaterial oder aber auch in Mischbauweise aus einem Aluminiumteil 12 und einem Stahlteil 13 hergestellt sein kann, wie dies lediglich in der Fig. 2 schematisch dargestellt ist.

Im Bereich der Stirnwand 9 bzw. im Bereich zwischen den beiden A-Säulenbauteilen 7 verläuft ein hier beispielhaft zweiteiliger Fußraum-Querträger 14 aus einem warmumgeformten bzw. formgehärteten, hochfesten Stahlmaterial, wobei die beiden Querträgerteile 15, 16 fest miteinander verbunden sind und sich jeweils als einstückige Bauteile im Wesentlichen über die gesamte Karosseriebreite, in Fahrzeugquerrichtung gesehen, erstrecken.

Im Bereich des Fußraum-Querträgers 14 bzw. im Bereich der A-Säulenbauteile 7 ist desweiteren ein sich in Fahrzeuglängsrichtung x über den Fahrgastzellenbereich 4 erstreckender innerer Schweller 17 angeordnet bzw. angebunden, der ebenfalls aus einem hochfesten, warmumgeformten bzw. formgehärteten Material hergestellt ist. Dieser hochfeste innere Schweller 17 erstreckt sich in Fahrzeuglängsrichtung gesehen bis zu einem in der Fig. 1 mehrteilig ausgebildeten Fersenblech 20. Dieses Fersenblech 20 kann jedoch auch, wie in der Fig. 2 dargestellt, einstückig ausgebildet sein und aus einem hochfesten, warmumgeformten bzw. formgehärteten Stahlmaterial bestehen.

Im weiteren Unterschied zwischen den beiden in der Fig. 1 und Fig. 2 dargestellten Varianten weist der innere Schweller 17 in der in der Fig. 2 gezeigten Ausgestaltung an seinem, in Fahrzeuglängsrichtung gesehen, hinteren, heckseitigen Ende zudem eine mit diesem verbundene Schwellerteilverlängerung 18 aus einem zum Beispiel niederfesten Stahlmaterial auf.

Wie dies den beiden Figuren weiter entnommen werden, ist im Fahrgastzellenbereich 4 ferner ein einstückiger Mitteltunnel 19 aus einem hochfesten, warmumgeformten bzw. formgehärteten Stahlmaterial vorgesehen, der zwischen dem Fußraum-Querträger 14 und dem Fersenblech 20 verläuft bzw. dort angebunden ist.

An den Mitteltunnel 19 schließen sich zu beiden Seiten zum jeweiligen Schweller 17 hin Bodenbleche 21 aus einem niederfesten Stahlmaterial an.

Weiter können, in Fahrzeugquerrichtung y gesehen, im Bereich zwischen dem Mitteltunnel 19 und dem inneren Schweller 17 jeweils Sitzquerträger 22 angeordnet bzw. mit diesen mittelbar oder unmittelbar verbunden sein, die bevorzugt ebenfalls aus einem formgehärteten, warmumgeformten und damit hochfesten Material oder aber auch aus einem niederfesten Stahlmaterial hergestellt sein können.

Im heckseitigen Fahrzeugbereich 23 ist ferner ein, in etwa parallel zum Fersenblech 20 verlaufender, hinterer Querträger 24 aus einem warmumgeformten bzw. formgehärteten und damit hochfesten Stahlmaterial angeordnet, der im Bereich zwischen zwei hinteren, auf gegenüberliegenden Fahrzeugseiten angeordneten Längsträgern 25 verläuft, die ebenfalls aus einem warmumgeformten bzw. formgehärteten und damit hochfesten Stahlmaterial hergestellt sind.

Diese hinteren Längsträger 25 sind zum Beispiel mit dem Fersenblech 20 bzw. mit dem hinteren Querträger 24 und/oder mit dem inneren Schweller 17 bzw. dessen Schwellerteilverlängerung 18 fest verbunden.

Im Bereich der hinteren Längsträger 25 sind ferner Radhäuser 26 aus zum Beispiel einem Leichtmetall, wie zum Beispiel Aluminium, angeordnet, während sich im Bereich zwischen den beiden hinteren Längsträgern 25 ein Bodenblech 27 aus zum Beispiel einem niederfesten Stahlmaterial erstreckt. Dieses Bodenblech 20 überdeckt im montierten Zustand, wie dies in der Fig. 2 dargestellt ist, mit einem Teilbereich den hinteren Querträger 24 zum Fersenblech 20 hin und kann damit vorzugsweise von unten her entsprechend abgestützt sein.

Die beiden fahrgastzellenseitigen Längsträgerbereiche 6 erstrecken sich im montierten Zustand bevorzugt bis zum Fersenblech 20 und sind mit diesem mittelbar oder vorzugsweise unmittelbar verbunden.

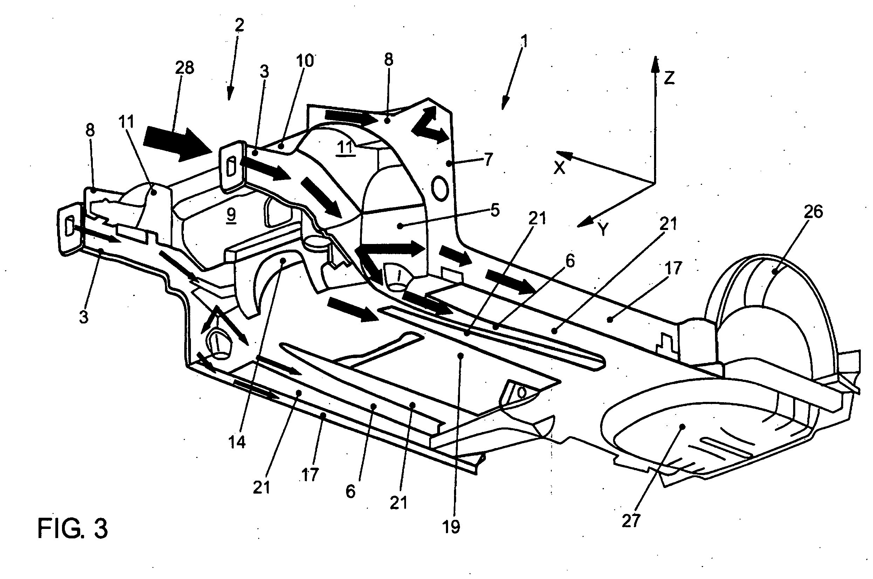

Damit wird insgesamt eine Bodenstruktur 1 ausgebildet, die für einen Frontalcrash 28, einen Seitencrash 29 und einen Heckcrash 30 so optimiert ausgelegt ist, dass die für diese jeweiligen Crashsituationen vorgegebenen Lastpfade, über die die Hauptbelastungskräfte, insbesondere die Kraftmaxima der Crashkräfte, geleitet werden, zum Großteil bzw. gegebenenfalls sogar vollständig aus warmumgeformten bzw. formgehärteten und damit hochfesten Trägerbauteilen bestehen, was nachfolgend in Verbindung mit den Fig. 3 bis 5 näher erläutert wird:
Die Fig. 3 zeigt eine schematische, perspektivische Unteransicht der Bodenstruktur 1 für den Fall eines Frontalcrashes, bei dem die über die beiden vorderen Längsträger 3, 8 eingeleiteten Kräfte zum einen über die Längsträgerverlängerung 5 in den unteren Säulenbereich des A-Säulenbauteils 7 und von dort weiter zum inneren Schweller 17 bzw. von der Längsträgerverlängerung 5 ausgehend zum Fußraum-Querträger 14 und zum fahrgastzellenseitigen Längsträgerbereich 6 geleitet werden. Vom Fußraum-Querträger 14 ausgehend erfolgt ferner noch eine Kraftableitung über den hochfesten Mitteltunnel 19.

Dies ist in der Fig. 3 durch die Pfeile dargestellt, die den Kraftfluss äußerst schematisch und beispielhaft zeigen.

Wie dies aus Fig. 3 weiter ersichtlich ist, wird die über den zweiten, vorderen Längsträger 8 eingeleitete Kraft in das A-Säulenbauteil 7 eingeleitet, und zwar entweder nach oben, in die hier nicht gezeigte obere A-Säule oder nach unten, in Richtung zur Längsträgerverlängerung 5, zum Fußraum-Querträger 14 und/oder zum inneren Schweller 17.

Diese in der Fig. 3 gezeigte Kraftverteilungsmöglichkeit bewirkt somit einen optimierten Kraftfluss und damit eine optimierte Kraftableitung in einer Frontalcrashsituation im Wesentlichen über die hochfesten Trägerbauteile der Bodenstruktur 1, während die restlichen Beplankungen bzw. Karosseriebauteile, die nicht im Hauptkraftfluss liegen, deshalb gewichtsgünstiger und preiswerter aus einem niederfesten Stahlmaterial und/oder aus einem Aluminium hergestellt werden können.

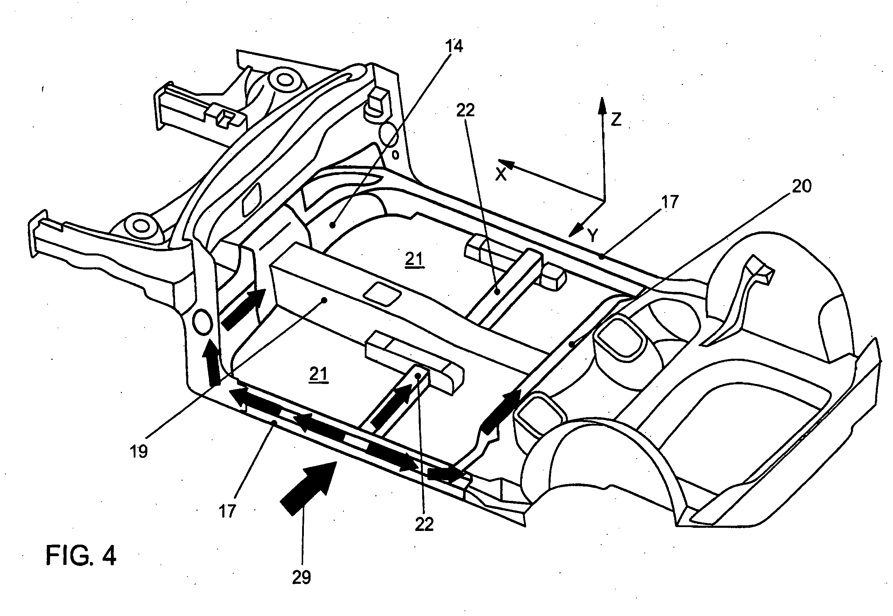

Das Gleiche gilt vom Prinzip her für die in der Fig. 4 dargestellte Seitencrashsituation, bei der die über den inneren Schweller 17 eingeleitete Kraft ringförmig über den Fußraum-Querträger 14 bzw. das Fersenblech 20 sowie den Sitzquerträger 22 abgeleitet werden kann.

Das zuvor zur Frontalcrashsituation Gesagte gilt hier identisch.

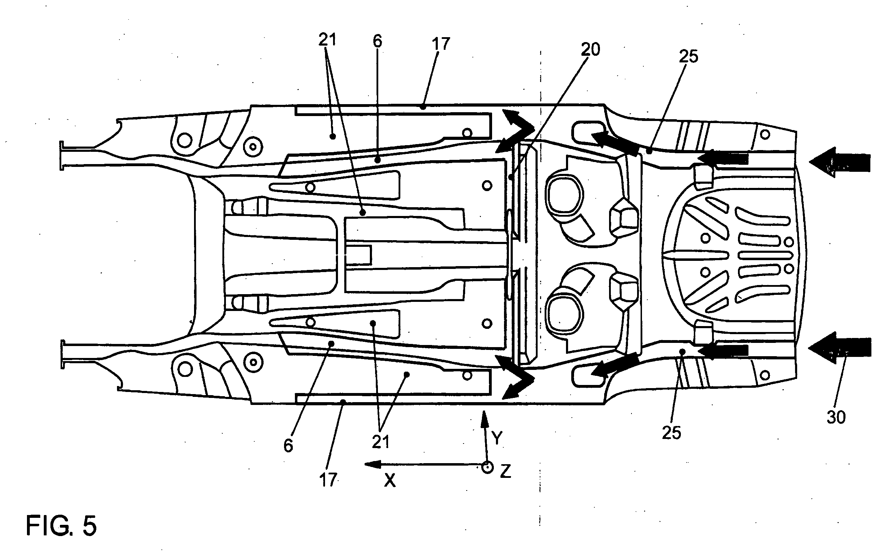

Ebenso trifft das zuvor Gesagte auf die in der Fig. 5 gezeigte Heckcrashsituation zu, bei der die über die hinteren Längsträger 25 eingeleiteten Kräfte in Fahrzeuglängsrichtung x gesehen im wesentlichen H-förmig über den inneren Schweller 17 bzw. die fahrgastzellenseitigen Längsträgerbereiche 6 sowie auch über das Fersenblech 20 bzw. den hinteren Querträger 24 verteilt und abgeleitet werden können.

### Bezugszeichenliste

- 1: Bodenstruktur
- 2: Vorderwagenbereich
- 3: erster, vorderer Längsträger
- 4: Fahrgastzellenbereich
- 5: Längsträgerverlängerung
- 6: Längsträgerbereich
- 7: A-Säulenbauteil
- 8: zweiter, vorderer Längsträger
- 9: Stirnwand
- 10: Querträger
- 11: Radhaus- und Federbeindom
- 12: Aluminiumteil
- 13: Stahlteil
- 14: Fußraum-Querträger
- 15: erstes Querträgerteil
- 16: zweites Querträgerteil
- 17: innerer Schweller
- 18: Schwellerteilverlängerung
- 19: Mitteltunnel
- 20: Fersenblech
- 21: Bodenblech
- 22: Sitzquerträger
- 23: heckseitiger Fahrzeugbereich
- 24: hinterer Querträger
- 25: hinterer Längsträger
- 26: Radhaus
- 27: Bodenblech
- 28: Frontalcrash
- 29: Seitencrash
- 30: Heckcrash

## Patentansprüche

1. Karosseriestruktur, insbesondere Bodenstruktur, für ein Kraftfahrzeug, mit definierte Lastpfade für Crashsituationen ausbildenden Trägerbauteilen, wobei die im Bereich eines Frontcrash-Lastpfades liegenden Trägerbauteile wenigstens zum Teil durch hochfeste Trägerbauteile aus einem warmumgeformten und/oder formgehärteten Stahlblech gebildet sind, die unmittelbar oder mittelbar miteinander verbunden sind, wobei die im Bereich des Frontcrash-Lastpfades liegenden hochfesten Trägerbauteile wenigstens durch jeweils ein, bezogen auf die Fahrzeugquerachse, auf gegenüberliegenden Fahrzeugseiten liegendes Längsträgerbauteil (5) gebildet sind, das durch eine Längsträgerverlängerung gebildet ist, die sich an einen vorderen Längsträger (3) aus einen demgegenüber niederfesten Stahlmaterial anschließt, **dadurch gekennzeichnet, dass** die Längsträgerverlängerung unmittelbar mit einem hochfesten Fußraum-Querträger (14), der ein im Bereich des Frontcrash-Lastpfades liegendes hochfestes Trägerbauteil aus einem warmumgeformten und/oder formgehärteten Stahlblech bildet, verbunden ist, wobei ein hochfestes Schwellerbauteil (17), das ein im Bereich des Frontcrash-Lastpfades liegendes hochfestes Trägerbauteil aus einem warmumgeformten und/oder formgehärteten Stahlblech bildet, unmittelbar mit dem hochfesten Fußraum-Querträger (14) und mit einem hochfesten A-Säulenbauteil (7), das ein im Bereich des Frontcrash-Lastpfades liegendes hochfestes Trägerbauteil aus einem warmumgeformten und/oder formgehärteten Stahlblech bildet, verbunden ist.

2. Karosseriestruktur nach Anspruch 1, **dadurch gekennzeichnet, dass** die nicht im Bereich des wenigstens einen definierten Lastpfades liegenden Karosseriebauteile oder Beplankungen wenigstens zum Teil aus einem gegenüber den hochfesten Trägerbauteilen niederfesten Stahlmaterial und/oder aus einem Leichtmetall und/oder aus einem Kunststoff hergestellt sind.

3. Karosseriestruktur nach Anspruch 1 oder Anspruch 2, **dadurch gekennzeichnet, dass** die im Bereich eines definierten Frontcrash-Lastpfades liegenden hochfesten Trägerbauteile weiter auch durch ein in Fahrzeuglängsrichtung verlaufendes MittelTunnelbauteil (19) gebildet sind.

4. Karosseriestruktur nach Anspruch 3, **dadurch gekennzeichnet, dass** das hochfeste Mitteltunnelbauteil (19) unmittelbar oder mittelbar, vorzugsweise unmittelbar mit dem Fußraum-Querträger (14) verbunden ist und/oder einstückig ausgebildet ist.

5. Karosseriestruktur nach einem der vorhergehenden Ansprüche, **dadurch gekennzeichnet,**
**dass** auf in Fahrzeugquerrichtung gegenüberliegenden Fahrzeugseiten jeweils ein erster vorderer Längsträger (3) aus einem niederfesten Stahlmaterial angeordnet ist, an den sich jeweils eine hochfeste Längsträgerverlängerung (5) anschließt, die an einem in Fahrzeughochachsenrichtung unteren Bereich des sich in etwa über die Türhöhe erstreckenden hochfesten A-Säulenbauteils (7) angebunden ist, und
**dass** an einem demgegenüber oberen Bereich des hochfesten A-Säulenbauteils (7) ein zweiter sich in etwa in Fahrzeuglängsrichtung erstreckender vorderer Längsträger (8) angebunden ist, der vorzugsweise in Fahrzeughochachsenrichtung oberhalb und/oder in Fahrzeugquerachsenrichtung weiter außen liegt als der jeweils zugeordnete erste Längsträger (3).

6. Karosseriestruktur nach Anspruch 5, **dadurch gekennzeichnet, dass** die im Bereich zwischen den beiden gegenüberliegenden A-Säulenbauteilen (7) verlaufenden Bauteile oder Beplankungen, vorzugsweise eine Stirnwand (9), vorzugsweise eine am hochfesten Fußraumquerträger (14) angebundene Stirnwand (9), und/oder ein windschutzscheibennaher Querträger (10), vorzugsweise ein an einer Stirnwand (9) angebundener Querträger (10), aus einem niederfesten Stahlmaterial und/oder aus Leichtmetall und/oder einem Kunststoff hergestellt sind und unmittelbar oder mittelbar, mit den hochfesten A-Säulenbauteilen (7) und/oder den hochfesten Längsträgerverlängerungen (5) und/oder den zweiten Längsträgern (8) und/oder dem hochfesten Fußraum-Querträger (14) verbunden sind.

7. Karosseriestruktur nach Anspruch 5 oder Anspruch 6, **dadurch gekennzeichnet, dass** die im Bereich zwischen den beiden Längsträgern (3, 8) oder zwischen den Längsträgern (3, 8) und der Längsträgerverlängerung (5) vorgesehenen oder angebundenen Bauteile oder Beplankungen, vorzugsweise ein Radhausbauteil (11) und/oder ein Federbeindombauteil, aus einem niederfesten Stahlmaterial und/oder aus einem Leichtmetall und/oder aus einem Kunststoffmaterial ausgebildet sind.

8. Karosseriestruktur nach einem der vorhergehenden Ansprüche, **dadurch gekennzeichnet, dass** sich an die hochfeste Längsträgerverlängerung (5) ein sich im montierten Zustand in den Fahrgastzellenbereich (4) hinein erstreckender Längsträgerbereich (6) anschließt, der in etwa parallel zum hochfesten Mitteltunnelbauteil (19) und/oder zu den hochfesten Schwellerbauteilen (17) verläuft und/oder der aus einem niederfesten Stahlmaterial oder aus einem Leichtmetall oder aus einem Kunststoffmaterial ausgebildet ist und/oder der sich in etwa bis zu einem heckseitigen Fersenblechteil (20) und/oder heckseitigen Querträgerbauteil (24) der Fahrgastzelle erstreckt und/oder der den Fußraum-Querträger (14) durchgreift oder untergreift, insbesondere untergreift und abstützt.

9. Karosseriestruktur nach einem der vorhergehenden Ansprüche, **dadurch gekennzeichnet, dass** der hochfeste Fußraum-Querträger (14) zweiteilig aus sich zwischen den gegenüberliegenden Fahrzeugseiten erstreckenden und/oder miteinander verbundenen einstückigen Querträgerteilen (15, 16) aufgebaut ist.

10. Karosseriestruktur nach einem der vorhergehenden Ansprüche, **dadurch gekennzeichnet, dass** das hochfeste A-Säulenbauteil (7) durch ein, bezogen auf die Lage im Fahrzeug, inneres sowie unterhalb der Gürtellinie verlaufendes, einstückiges Bauteil gebildet ist.

11. Karosseriestruktur nach einem der vorhergehenden Ansprüche, **dadurch gekennzeichnet, dass** die im Bereich eines definierten Seitencrash-Lastpfades liegenden hochfesten Trägerbauteile wenigstens durch jeweils ein, bezogen auf die Fahrzeugquerachse, auf gegenüberliegenden Fahrzeugseiten liegendes, vorzugsweise innenliegendes Schwellerbauteil (17) und/oder einen in Fahrzeugquerrichtung verlaufenden, bezogen auf die Fahrzeuglängsrichtung vorderen Fußraum-Querträger (14) und/oder wenigstens einen in Fahrzeugquerrichtung verlaufenden, bezogen auf die Fahrzeuglängsrichtung hinteren Träger, insbesondere ein Fersenblech (20), und/oder einen in Fahrzeugquerrichtung verlaufenden Sitzquerträger (22) gebildet sind.

12. Karosseriestruktur nach Anspruch 11, **dadurch gekennzeichnet, dass** der vordere hochfeste Fußraum-Querträger (14) und/oder der hochfeste Sitzquerträger (22) und/oder das hochfeste Fersenblech (20) unmittelbar oder mittelbar, vorzugsweise unmittelbar, mit dem hochfesten Schwellerbauteil (17) verbunden ist bzw. sind.

13. Karosseriestruktur nach Anspruch 11 oder Anspruch 12, **dadurch gekennzeichnet, dass** der Sitzquerträger (22) unmittelbar oder mittelbar mit einem hochfesten Mitteltunnelbauteil (19) verbunden ist, das sich in Fahrzeuglängsrichtung gesehen zwischen dem Fußraum-Querträger (14) und dem Fersenblech (20) erstreckt und mit dem Fußraum-Querträger (14) und/oder mit dem Fersenblech (20) unmittelbar oder mittelbar verbunden ist.

14. Karosseriestruktur nach einem der Ansprüche 11 bis 13, **dadurch gekennzeichnet, dass** der Fußraum-Querträger (14) und/oder das Schwellerbauteil (17) unmittelbar oder mittelbar, vorzugsweise unmittelbar, mit einem A-Säulenbauteil (7) verbunden ist, das sich vorzugsweise vom Schwellerbereich bis zur Gürtellinie erstreckt.

15. Karosseriestruktur nach einem der Ansprüche 11 bis 14, **dadurch gekennzeichnet, dass** die im Bereich eines definierten Seitencrash-Lastpfades liegenden hochfesten Trägerbauteile einen bodenseitig und/oder fahrgastzellenseitig verlaufenden, in etwa ririg- oder rechteckförmigen Rahmen aus hochfesten Trägerbauteilen ausbilden, wobei bevorzugt vorgesehen ist, dass zur Ausbildung eines netz- oder gitterförmigen Aufbaus gegebenenfalls wenigstens ein weiteres, bevorzugt in Fahrzeugquerrichtung oder in Fahrzeuglängsrichtung verlaufendes, hochfestes Trägerbauteil, vorzugsweise ein hochfestes Mitteltunnelbauteil (19) und/oder wenigstens ein Sitzquerträger (22), strebenartig im Rahmen verläuft und/oder mit diesem mittelbar oder unmittelbar verbunden ist.

16. Karosseriestruktur nach einem der Ansprüche 11 bis 15, **dadurch gekennzeichnet, dass** die im Bereich zwischen den gegenüberliegenden Schwellerbauteilen (17) und/oder zwischen dem Mitteltunnelbauteil (19) und den Schwellerbauteilen (17) und/oder zwischen dem Fußraum-Querträger (14) und dem hinteren Träger, insbesondere dem Fersenblech (20), liegenden Bauteile oder Beplankungen, insbesondere eine Bodenwand (21), aus einem niederfesten Stahlmaterial und/oder aus einem Leichtmetall und/oder aus einem Kunststoff hergestellt ist.

17. Karosseriestruktur nach einem der vorhergehenden Ansprüche, **dadurch gekennzeichnet, dass** die im Bereich eines definierten Heckcrash-Lastpfades liegenden hochfesten Trägerbauteile wenigstens durch jeweils einen, bezogen auf die Fahrzeugquerachse, auf gegenüberliegenden Fahrzeugseiten liegenden, hinteren bzw. heckseitigen Längsträger (25) und/oder durch einen in Fahrzeugquerachsenrichtung verlaufenden, bezogen auf die Fahrzeuglängsrichtung, hinteren, vorzugsweise einstückigen Querträger (24) und/oder durch ein in Fahrzeugquerachsenrichtung verlaufendes, vorzugsweise einstückiges Fersenblech (20) und/oder durch jeweils ein, bezogen auf die Fahrzeugquerachse, auf gegenüberliegenden Fahrzeugseiten liegendes, vorzugsweise innenliegendes Schwellerbauteil (17) gebildet ist.

18. Karosseriestruktur nach Anspruch 17, **dadurch gekennzeichnet, dass** die hochfesten hinteren Längsträger (25) unmittelbar oder mittelbar, vorzugsweise unmittelbar mit dem zugeordneten hochfesten Schwellerbauteil (17) und/oder mit dem hochfesten hinteren Querträger (24) und/oder mit dem hochfesten Fersenblech (20) und/oder mit einem fahrgastzellenseitigen Längsträgerbereich (6) verbunden sind.

19. Karosseriestruktur nach Anspruch 17 oder Anspruch 18, **dadurch gekennzeichnet, dass** das Fersenblech (20) unmittelbar oder mittelbar, vorzugsweise unmittelbar, mit dem jeweils zugeordneten hochfesten Schwellerbauteil (17) und/oder mit dem hochfesten hinteren Querträger (24) und/oder mit einem vorzugsweise hochfesten Mitteltunnelbereich (19) und/oder mit einem fahrgastzellenseitigen Längsträgerbereich (6) verbunden ist.

20. Karosseriestruktur nach Anspruch 18 oder Anspruch 19, **dadurch gekennzeichnet, dass** der fahrgastzellenseitige Längsträgerbereich (6) durch eine Verlängerung eines vorderen Längsträgerbauteils (5) gebildet ist, insbesondere durch einen sich an ein vorderwagenseitig angeordnetes, hochfestes Längsträgerbauteil (5) anschließenden Längsträgerbereich (6) gebildet ist, wobei bevorzugt vorgesehen ist, dass der fahrgastzellenseitige Längsträgerbereich (6) aus einem niederfesten Stahlmaterial und/oder aus einem Leichtmetall und/oder aus einem Kunststoff hergestellt ist.

21. Karosseriestruktur nach einem der Ansprüche 17 bis 20, **dadurch gekennzeichnet, dass** das hochfeste Schwellerbauteil (17) mit dem hochfesten hinteren Querträger (24) unmittelbar oder mittelbar, vorzugsweise unmittelbar verbunden ist.

22. Karosseriestruktur nach einem der Ansprüche 17 bis 21, **dadurch gekennzeichnet, dass** das hochfeste Schwellerbauteil (17) in Fahrzeuglängsrichtung sowie nach hinten in Richtung Heckseite gesehen über das Fersenblech (20) hinaus mit einer demgegenüber aus einem niederfesten Stahlmaterial und/oder aus einem Leichtmetall und/oder aus einem Kunststoff hergestellten Schwellerteilverlängerung (18) verlängert ist und mit dieser Schwellerteilverlängerung (18) mit dem jeweils zugeordneten hinteren hochfesten Längsträger (25) und/oder mit dem hochfesten hinteren Querträger (24) unmittelbar oder mittelbar, vorzugsweise unmittelbar, verbunden ist.

23. Karosseriestruktur nach einem der Ansprüche 17 bis 22, **dadurch gekennzeichnet, dass** die den Heckcrash-Lastpfad ausbildenden hochfesten hinteren Längsträger (25) mitsamt den hochfesten fahrgastzellenseitigen Schwellerbauteilen (17) einerseits sowie der hochfeste hintere Querträger (24) und/oder das hochfeste Fersenblech (20) andererseits eine bodenseitige, hochfeste H-Struktur ausbilden.

24. Karosseriestruktur nach einem der Ansprüche 17 bis 23, **dadurch gekennzeichnet, dass** die im Bereich zwischen den gegenüberliegenden hinteren hochfesten Längsträgern (25) und/oder dem hochfesten Fersenblech (20) bzw. hinteren Querträger (24) liegenden und/oder angeordneten bzw. die dort unmittelbar oder mittelbar angebundenen Bauteile und/oder Beplankungen, insbesondere eine Bodenwand (27) und/oder ein rücksitzseitiger Sitzquerträger, aus einem demgegenüber niederfesten Stahlmaterial und/oder aus einem Leichtmetall und/oder einem Kunststoff hergestellt ist.

25. Karosseriestruktur nach einem der Ansprüche 1 bis 10 und einem der Ansprüche 11 bis 16 und einem der Ansprüche 17 bis 24, **dadurch gekennzeichnet, dass** die den Frontcrash-Lastpfad und die den Seitencrash-Lastpfad und die den Heckcrash-Lastpfad ausbildenden hochfesten Trägerbauteile Bestandteil einer Karosseriestruktur, insbesondere einer Bodenstruktur (11), eines Fahrzeugs bilden.

## Claims

1. Body structure, in particular floor structure, for a motor vehicle, with support components forming defined load paths for crash situations, wherein the support components located in the region of a head-on-crash load path are at least partially formed by high-strength support components composed of heat-deformed and/or shape-hardened sheet steel, which support components are connected directly or indirectly to one another, wherein the high-strength support components located in the region of the head-on-crash load path are formed at least by in each case one longitudinal member component (5) which is located on opposite sides of the vehicle with respect to the transverse axis of the vehicle and is formed by a longitudinal member extension which adjoins a front longitudinal member (3) composed of steel material, which is low-strength in comparison, **characterized in that** the longitudinal member extension is connected directly to a high-strength foot-well crossmember (14) which forms a high-strength support component located in the region of the head-on-crash load path and composed of heat-deformed and/or shape-hardened sheet steel, wherein a high-strength sill component (17) which forms a high-strength support component located in the region of the head-on-crash load path and composed of heat-deformed and/or shape-hardened sheet steel is connected directly to the high-strength foot-well crossmember (14) and to a high-strength A pillar component (7) which forms a high-strength support component located in the region of the head-on-crash load path and composed of heat-deformed and/or shape-hardened sheet steel.

2. Body structure according to Claim 1, **characterized in that** the body components or panels not located in the region of the at least one defined load path are at least partially produced from steel material, which is low-strength in comparison to the high-strength support components, and/or a light metal and/or from a plastic.

3. Body structure according to Claim 1 or Claim 2, **characterized in that** the high-strength support components located in the region of a defined head-on-crash load path are furthermore also formed by a central tunnel component (19) running in the longitudinal direction of the vehicle.

4. Body structure according to Claim 3, **characterized in that** the high-strength central tunnel component (19) is connected directly or indirectly, preferably directly, to the foot-well crossmember (14) and/or is formed integrally therewith.

5. Body structure according to one of the preceding claims, **characterized in that** a first front longitudinal member (3) composed of low-strength steel material is arranged in each case on opposite sides of the vehicle in the transverse direction of the vehicle and is adjoined in each case by a high-strength longitudinal member extension (5) which is joined to a lower region, in the direction of the vertical axis of the vehicle, of the high-strength A pillar component (7), which extends approximately over the height of the door, and **in that** a second front longitudinal member (8) extending approximately in the longitudinal direction of the vehicle is joined to an upper region, by contrast, of the high-strength A pillar component (7), said second front longitudinal member preferably lying in the direction of the vertical axis of the vehicle above, and/or in the direction of the transverse axis of the vehicle further outwards, than the respectively associated first longitudinal member (3).

6. Body structure according to Claim 5, **characterized in that** the components or panels running in the region between the two opposite A pillar components (7), preferably an end wall (9), preferably an end wall (9) joined to the high-strength foot-well crossmember (14), and/or a crossmember (10) in the vicinity of the windscreen, preferably a crossmember (10) joined to an end wall (9), are produced from a low-strength steel material and/or from light metal and/or a plastic and are connected directly or indirectly to the high-strength A pillar components (7) and/or to the high-strength longitudinal member extensions (5) and/or to the second longitudinal members (8) and/or to the high-strength foot-well crossmember (14).

7. Body structure according to Claim 5 or Claim 6, **characterized in that** the components or panels which are provided or joined in the region between the two longitudinal members (3, 8) or between the longitudinal members (3, 8) and the longitudinal member extension (5), preferably a wheel house component (11) and/or a suspension-strut-dome component, are formed from low-strength steel material and/or from light metal and/or from a plastics material.

8. Body structure according to one of the preceding claims, **characterized in that** the high-strength longitudinal member extension (5) is adjoined by a longitudinal member region (6) which, in the fitted state, extends into the passenger cell region (4) and runs approximately parallel to the high-strength central tunnel component (19) and/or to the high-strength sill components (17) and/or which is formed from a low-strength steel material or from light metal or from a plastics material and/or which extends approximately as far as a rear-side heel plate part (20) and/or rear-side crossmember component (24) of the passenger cell and/or which reaches through or engages under the foot-well crossmember (14), in particular engages under and supports the latter.

9. Body structure according to one of the preceding claims, **characterized in that** the high-strength foot-well crossmember (14) is constructed in two parts from single-piece crossmember parts (15, 16) which extend between the opposite sides of the vehicle and/or are connected to each other.

10. Body structure according to one of the preceding claims, **characterized in that** the high-strength A pillar component (7) is formed by a single-piece component which, with respect to the position in the vehicle, is an inner component and runs below the belt line.

11. Body structure according to one of the preceding claims, **characterized in that** the high-strength support components lying in the region of a defined side-crash load path are formed at least by in each case one, preferably inner, sill component (17) lying on opposite sides of the vehicle with respect to the transverse axis of the vehicle, and/or by a foot-well crossmember (14) which runs in the transverse direction of the vehicle and is at the front with respect to the longitudinal direction of the vehicle and/or by at least one support which runs in the transverse direction of the vehicle and is at the rear with respect to the longitudinal direction of the vehicle, in particular a heel plate (20), and/or by a seat crossmember (22) running in the transverse direction of the vehicle.

12. Body structure according to Claim 11, **characterized in that** the front high-strength foot-well crossmember (14) and/or the high-strength seat crossmember (22) and/or the high-strength heel plate (20) are or is connected directly or indirectly, preferably directly, to the high-strength sill component (17).

13. Body structure according to Claim 11 or Claim 12, **characterized in that** the seat crossmember (22) is connected directly or indirectly to a high-strength central tunnel component (19) which, as seen in the longitudinal direction of the vehicle, extends between the foot-well crossmember (14) and the heel plate (20) and is connected directly or indirectly to the foot-well crossmember (14) and/or to the heel plate (20).

14. Body structure according to one of Claims 11 to 13, **characterized in that** the foot-well crossmember (14) and/or the sill component (17) are/is connected directly or indirectly, preferably directly, to an A pillar component (7) which preferably extends from the sill region as far as the belt line.

15. Body structure according to one of Claims 11 to 14, **characterized in that** the high-strength support components lying in the region of a defined side-crash load path form an approximately annular or rectangular frame which runs on the floor side and/or on the passenger cell side and is composed of high-strength support components, wherein provision is preferably made, in order to form a net- or lattice-like structure, for optionally at least one further, high-strength support component preferably running in the transverse direction of the vehicle or in the longitudinal direction of the vehicle, preferably a high-strength central tunnel component (19) and/or at least one seat crossmember (22), to run in the frame in the manner of a strut and/or to be connected indirectly or directly to said frame.

16. Body structure according to one of Claims 11 to 15, **characterized in that** the components or panels lying in the region between the opposite sill components (17) and/or between the central tunnel component (19) and the sill components (17) and/or between the foot-well crossmember (14) and the rear support, in particular the heel plate (20), in particular a bottom wall (21), is produced from low-strength steel material and/or from light metal and/or from a plastic.

17. Body structure according to one of the preceding claims, **characterized in that** the high-strength support components lying in the region of a defined rear-crash load path is formed at least by in each case one rear or rear-side longitudinal member (25) lying on opposite sides of the vehicle with respect to the transverse axis of the vehicle, and/or by a preferably single-piece crossmember (24) which runs in the direction of the transverse axis of the vehicle and is at the rear with respect to the longitudinal direction of the vehicle, and/or by a preferably single-piece heel plate (20) running in the direction of the transverse axis of the vehicle, and/or by in each case one, preferably inner, sill component (17) lying on opposite sides of the vehicle with respect to the transverse axis of the vehicle.

18. Body structure according to Claim 17, **characterized in that** the high-strength rear longitudinal members (25) are connected directly or indirectly, preferably directly, to the associated high-strength sill component (17) and/or to the high-strength rear crossmember (24) and/or to the high-strength heel plate (20) and/or to a longitudinal member region (6) on the passenger-cell side.

19. Body structure according to Claim 17 or Claim 18, **characterized in that** the heel plate (20) is connected directly or indirectly, preferably directly, to the respectively associated high-strength sill component (17) and/or to the high-strength rear crossmember (24) and/or to a preferably high-strength centre tunnel region (19) and/or to a longitudinal member region (6) on the passenger-cell side.

20. Body structure according to Claim 18 or Claim 19, **characterized in that** the longitudinal member region (6) on the passenger-cell side is formed by an extension of a front longitudinal member component (5), in particular by a longitudinal member region (6) adjoining a high-strength longitudinal member component (5) arranged on the front-end side, wherein provision is preferably made for the longitudinal member region (6) on the passenger-cell side to be produced from low-strength steel material and/or from light metal and/or from a plastic.

21. Body structure according to one of Claims 17 to 20, **characterized in that** the high-strength sill component (17) is connected directly or indirectly, preferably directly, to the high-strength rear crossmember (24).

22. Body structure according to one of Claims 17 to 21, **characterized in that** the high-strength sill component (17) is extended in the longitudinal direction of the vehicle and to the rear, as seen in the direction of the rear side, beyond the heel plate (20) by a sill-part extension (18), which is produced, by contrast, from low-strength steel material and/or from light metal and/or from a plastic and, by means of said sill-part extension (18), is connected directly or indirectly, preferably directly, to the respectively associated rear high-strength longitudinal member (25) and/or to the high-strength rear crossmember (24).

23. Body structure according to one of Claims 17 to 22, **characterized in that** the high-strength rear longitudinal members (25) forming the rear-crash load path together with the high-strength sill components (17) on the passenger-side, on the one hand, and the high-strength rear crossmember (24) and/or the high-strength heel plate (20), on the other hand, form a high-strength H structure on the floor side.

24. Body structure according to one of Claims 17 to 23, **characterized in that** the components and/or panels lying and/or arranged in the region between the opposite rear high-strength longitudinal members (25) and/or the high-strength heel plate (20) or rear crossmember (24), or the components and/or panels joined there directly or indirectly, in particular a bottom wall (27) and/or a seat crossmember in the rear-seat side, is produced from steel material which, by contrast, is low-strength and/or from light metal and/or a plastic.

25. Body structure according to one of Claims 1 to 10, and one of Claims 11 to 16 and one of Claims 17 to 24, **characterized in that** the high-strength support components forming the head-on-crash load path and those forming the side-crash load path and those forming the rear-crash load path form part of a body structure, in particular a floor structure (11), of a vehicle.

## Revendications

1. Structure de carrosserie, en particulier structure de plancher, pour un véhicule automobile, comprenant des composants de support constituant des trajectoires de charge définies pour des situations de collision, les composants de support situés dans la région d'une trajectoire de charge en cas de collision frontale étant formés au moins en partie par des composants de support hautement rigides en tôle d'acier formée à chaud et/ou durcie au formage, qui sont connectés les uns aux autres directement ou indirectement, les composants de support hautement rigides situés dans la région de la trajectoire de charge en cas de collision frontale étant formés au moins par un composant de longeron respectif (5) situé, par rapport à l'axe transversal du véhicule, sur des côtés opposés du véhicule, lequel composant de longeron est formé par un prolongement de longeron qui se raccorde à un longeron avant (3) constitué d'un matériau en acier de faible rigidité par rapport à celui-ci, **caractérisée en ce que** le prolongement de longeron est connecté directement à une traverse d'espace pour les pieds hautement rigide (14) qui forme un composant de support hautement rigide situé dans la région de la trajectoire de charge en cas de collision frontale, constitué d'une tôle d'acier formée à chaud et/ou durcie au formage, un composant de bas de caisse hautement rigide (17) qui forme un composant de support hautement rigide situé dans la région de la trajectoire de charge en cas de collision frontale, constitué d'une tôle d'acier formée à chaud et/ou durcie au formage étant connecté directement à la traverse d'espace pour les pieds hautement rigide (14) et à un composant de colonne A hautement rigide (7) qui forme un composant de support hautement rigide situé dans la région de la trajectoire de charge en cas de collision frontale, constitué d'une tôle d'acier formée à chaud et/ou durcie au formage.

2. Structure de carrosserie selon la revendication 1, **caractérisée en ce que** les composants de carrosserie ou les panneaux de carrosserie non situés dans la région de l'au moins une trajectoire de charge définie sont fabriqués au moins en partie en un matériau en acier de faible rigidité par rapport aux composants de support hautement rigides et/ou en un métal léger et/ou en plastique.

3. Structure de carrosserie selon la revendication 1 ou la revendication 2, **caractérisée en ce que** les composants de support hautement rigides situés dans la région d'une trajectoire de charge définie en cas de collision frontale sont en outre également formés par un composant de tunnel central (19) s'étendant dans la direction longitudinale du véhicule.

4. Structure de carrosserie selon la revendication 3, **caractérisée en ce que** le composant de tunnel central hautement rigide (19) est connecté directement ou indirectement, de préférence directement, à la traverse d'espace pour les pieds (14) et/ou est réalisé d'une seule pièce avec celle-ci.

5. Structure de carrosserie selon l'une quelconque des revendications précédentes, **caractérisée en ce que**, sur des côtés du véhicule opposés dans la direction transversale du véhicule, est à chaque fois disposé un premier longeron avant (3) en matériau en acier de faible rigidité auquel se raccorde à chaque fois un prolongement de longeron hautement rigide (5) qui est relié à une région inférieure, dans la direction de l'axe vertical du véhicule, du composant de colonne A hautement rigide (7) s'étendant approximativement sur la hauteur de la porte, et
**en ce qu'**un deuxième longeron avant (8) s'étendant approximativement dans la direction longitudinale du véhicule est relié à une région comparativement supérieure du composant de colonne A hautement rigide (7), lequel longeron avant est situé de préférence dans la direction de l'axe vertical du véhicule au-dessus, et/ou dans la direction de l'axe transversal du véhicule plus à l'extérieur que le premier longeron respectivement associé (3).

6. Structure de carrosserie selon la revendication 5, **caractérisée en ce que** les composants ou panneaux de carrosserie s'étendant dans la région entre les deux composants de colonne A opposés (7), de préférence une paroi frontale (9), de préférence une paroi frontale (9) reliée à la traverse d'espace pour les pieds hautement rigide (14), et/ou une traverse (10) proche du pare-brise, de préférence une traverse (10) reliée à une paroi frontale (9), sont fabriqués en un matériau en acier de faible rigidité et/ou en un métal léger et/ou en plastique et sont connectés directement ou indirectement aux composants de colonne A hautement rigides (7) et/ou aux prolongements de longerons hautement rigides (5) et/ou aux deuxièmes longerons (8) et/ou à la traverse d'espace pour les pieds hautement rigide (14).

7. Structure de carrosserie selon la revendication 5 ou la revendication 6, **caractérisée en ce que** les composants ou panneaux de carrosserie prévus ou reliés dans la région entre les deux longerons (3, 8) ou entre les longerons (3, 8) et le prolongement de longeron (5), de préférence un composant de passage de roue (11) et/ou un composant de la coupelle de suspension, sont réalisés en un matériau en acier de faible rigidité et/ou en un métal léger et/ou en un matériau en plastique.

8. Structure de carrosserie selon l'une quelconque des revendications précédentes, **caractérisée en ce qu'**une région de longeron (6) s'étendant dans l'état monté à l'intérieur de la région de l'habitacle (4) se raccorde au prolongement de longeron hautement rigide (5), laquelle région de longeron s'étend approximativement parallèlement au composant de tunnel central hautement rigide (19) et/ou aux composants de bas de caisse hautement rigides (17) et/ou est réalisée en un matériau en acier de faible rigidité ou en un métal léger ou en un matériau en plastique et/ou s'étend approximativement jusqu'à une partie de plaque de talon arrière (20) et/ou jusqu'à un composant de traverse arrière (24) de l'habitacle et/ou s'engage au travers ou en dessous de la traverse d'espace pour les pieds (14), en particulier vient en prise en dessous de celle-ci et s'appuie sur celle-ci.

9. Structure de carrosserie selon l'une quelconque des revendications précédentes, **caractérisée en ce que** la traverse d'espace pour les pieds hautement rigide (14) est réalisée en deux parties à partir de parties de traverse d'une seule pièce (15, 16) s'étendant entre les côtés opposés du véhicule et/ou connectées l'une à l'autre.

10. Structure de carrosserie selon l'une quelconque des revendications précédentes, **caractérisée en ce que** le composant de colonne A hautement rigide (7) est formé par un composant d'une seule pièce s'étendant, par rapport à sa position dans le véhicule, à l'intérieur ainsi qu'en dessous de la ligne de ceinture.

11. Structure de carrosserie selon l'une quelconque des revendications précédentes, **caractérisée en ce que** les composants de support hautement rigides situés dans la région d'une trajectoire de charge définie en cas de collision latérale sont formés respectivement par un composant de bas de caisse (17) situé, par rapport à l'axe transversal du véhicule, sur des côtés opposés du véhicule, de préférence situé à l'intérieur et/ou une traverse d'espace pour les pieds (14) s'étendant dans la direction transversale du véhicule, située à l'avant par rapport à la direction longitudinale du véhicule et/ou au moins un support s'étendant dans la direction transversale du véhicule, situé à l'arrière par rapport à la direction longitudinale du véhicule, en particulier une plaque de talon (20), et/ou une traverse de siège (22) s'étendant dans la direction transversale du véhicule.

12. Structure de carrosserie selon la revendication 11, **caractérisée en ce que** la traverse d'espace pour les pieds hautement rigide avant (14) et/ou la traverse de siège hautement rigide (22) et/ou la plaque de talon hautement rigide (20) est ou sont connectées directement ou indirectement, de préférence directement, au composant de bas de caisse hautement rigide (17).

13. Structure de carrosserie selon la revendication 11 ou la revendication 12, **caractérisée en ce que** la traverse de siège (22) est connectée directement ou indirectement à un composant de tunnel central hautement rigide (19) qui, vu dans la direction longitudinale du véhicule, s'étend entre la traverse d'espace pour les pieds (14) et la plaque de talon (20) et est connecté directement ou indirectement à la traverse d'espace pour les pieds (14) et/ou à la plaque de talon (20).

14. Structure de carrosserie selon l'une quelconque des revendications 11 à 13, **caractérisée en ce que** la traverse d'espace pour les pieds (14) et/ou le composant de bas de caisse (17) sont connectés directement ou indirectement, de préférence directement, à un composant de colonne A (7), lequel s'étend de préférence de la région de bas de caisse jusqu'à la ligne de ceinture.

15. Structure de carrosserie selon l'une quelconque des revendications 11 à 14, **caractérisée en ce que** les composants de support hautement rigides situés dans la région d'une trajectoire de charge définie en cas de collision latérale constituent un châssis s'étendant du côté du plancher et/ou du côté de l'habitacle, de forme approximativement annulaire ou rectangulaire, constitué de composants de supports hautement rigides, et il est de préférence prévu que pour réaliser une structure en forme de filet ou de réseau, éventuellement au moins un composant de support supplémentaire hautement rigide s'étendant de préférence dans la direction transversale du véhicule ou dans la direction longitudinale du véhicule, de préférence un composant de tunnel central hautement rigide (19) et/ou au moins une traverse de siège (22), s'étende en forme d'entretoise dans le châssis et/ou soit connecté à celui-ci indirectement ou directement.

16. Structure de carrosserie selon l'une quelconque des revendications 11 à 15, **caractérisée en ce que** les composants ou panneaux de carrosserie, en particulier une paroi de plancher (21), situés dans la région entre les composants de bas de caisse opposés (17) et/ou entre le composant de tunnel central (19) et les composants de bas de caisse (17) et/ou entre la traverse d'espace pour les pieds (14) et le support arrière, en particulier la plaque de talon (20), est fabriqué en un matériau en acier de faible rigidité et/ou en un métal léger et/ou en plastique.

17. Structure de carrosserie selon l'une quelconque des revendications précédentes, **caractérisée en ce que** les composants de support hautement rigides situés dans la région d'une trajectoire de charge définie en cas de collision par l'arrière est formé au moins dans chaque cas par un longeron arrière ou du côté arrière (25) situé, par rapport à l'axe transversal du véhicule, sur des côtés opposés du véhicule, et/ou par une traverse arrière, par rapport à la direction longitudinale du véhicule, de préférence d'une seule pièce (24), s'étendant dans la direction de l'axe transversal du véhicule et/ou par une plaque de talon de préférence d'une seule pièce (20), s'étendant dans la direction de l'axe transversal du véhicule et/ou par un composant respectif de bas de caisse (17) de préférence situé à l'intérieur, situé, par rapport à l'axe transversal du véhicule, sur des côtés opposés du véhicule.

18. Structure de carrosserie selon la revendication 17, **caractérisée en ce que** les longerons arrière hautement rigides (25) sont connectés directement ou indirectement, de préférence directement, au composant de bas de caisse hautement rigide associé (17) et/ou à la traverse arrière hautement rigide (24) et/ou à la plaque de talon hautement rigide (20) et/ou à une région de longeron (6) du côté de l'habitacle.

19. Structure de carrosserie selon la revendication 17 ou 18, **caractérisée en ce que** la plaque de talon (20) est connectée directement ou indirectement, de préférence directement, au composant de bas de caisse hautement rigide respectivement associé (17) et/ou à la traverse arrière hautement rigide (24) et/ou à une région de tunnel centrale de préférence hautement rigide (19) et/ou à une région de longeron (6) du côté de l'habitacle.

20. Structure de carrosserie selon la revendication 18 ou la revendication 19, **caractérisée en ce que** la région de longeron (6) du côté de l'habitacle est formée par un prolongement d'un composant de longeron avant (5), en particulier par une région de longeron (6) se raccordant à un composant de longeron hautement rigide (5) disposé du côté de la partie avant du véhicule, et il est prévu de préférence que la région de longeron du côté de l'habitacle (6) soit fabriquée en un matériau en acier de faible rigidité et/ou en un métal léger et/ou en plastique.

21. Structure de carrosserie selon l'une quelconque des revendications 17 à 20, **caractérisée en ce que** le composant de bas de caisse hautement rigide (17) est connecté directement ou indirectement, de préférence directement, à la traverse arrière hautement rigide (24).

22. Structure de carrosserie selon l'une quelconque des revendications 17 à 21, **caractérisée en ce que** le composant de bas de caisse hautement rigide (17), vu dans la direction longitudinale du véhicule et vers l'arrière dans la direction du côté arrière, est prolongé au-delà de la plaque de talon (20) par un prolongement de partie de bas de caisse (18) fabriqué par rapport à celui-ci en un matériau en acier de faible rigidité et/ou en un métal léger et/ou en plastique et est connecté directement ou indirectement, de préférence directement, par ce prolongement de partie de bas de caisse (18), au longeron arrière hautement rigide (25) respectivement associé et/ou à la traverse arrière hautement rigide (24).

23. Structure de carrosserie selon l'une quelconque des revendications 17 à 22, **caractérisée en ce que** les longerons arrière hautement rigides (25) constituant la trajectoire de charge en cas de collision par l'arrière conjointement avec les composants de bas de caisse hautement rigides (17) du côté de l'habitacle d'une part ainsi que la traverse arrière hautement rigide (24) et/ou la plaque de talon hautement rigide (20) d'autre part constituent une structure hautement rigide en forme de H du côté du plancher.

24. Structure de carrosserie selon l'une quelconque des revendications 17 à 23, **caractérisée en ce que** les composants et/ou panneaux de carrosserie, en particulier une paroi de plancher (27) et/ou une traverse de siège du côté du siège arrière, situés et/ou disposés dans la région entre les longerons arrière hautement rigides opposés (25) et/ou la plaque de talon hautement rigide (20) ou la traverse arrière (24), ou reliés directement ou indirectement à cet endroit, est fabriqué en un matériau en acier comparativement de faible rigidité et/ou en un métal léger et/ou en plastique.

25. Structure de carrosserie selon l'une quelconque des revendications 1 à 10, et selon l'une quelconque des revendications 11 à 16 et selon l'une quelconque des revendications 17 à 24, **caractérisée en ce que** les composants de support hautement rigides constituant la trajectoire de charge en cas de collision frontale et la trajectoire de charge en cas de collision latérale et la trajectoire de charge en cas de collision par l'arrière font partie d'une structure de carrosserie, en particulier d'une structure de plancher (11), d'un véhicule.
